# EUROPEAN PATENT APPLICATION

(11) **EP 4 841 806 A1**
(43) Date of publication of application: **18.11.2026**
(21) Application number: 26166747.1
(22) Date of filing: 23.03.2026
(51) Int. Cl.: H01M 50/536, H01M 50/586, H01M 50/593

(54) **SECONDARY BATTERY, BATTERY PACK, AND ELECTRICAL DEVICE**

(30) Priority: 16.05.2025 KR 20250063925
(71) Applicant: SAMSUNG SDI CO., LTD., Yongin-si, Gyeonggi-do 17084 (KR)
(72) Inventor: DOO, Jae Gyun, 16678 Suwon-si, Gyeonggi-do (KR); KIM, Gwi Jae, 16678 Suwon-si, Gyeonggi-do, (KR); KIM, Hae Ju, 16678 Suwon-si, Gyeonggi-do (KR); JUNG, Meen Kyoung, 16678 Suwon-si, Gyeonggi-do (KR); BAK, Hyo Rim, 16678 Suwon-si, Gyeonggi-do (KR); OH, Jung Yeon, 16678 Suwon-si, Gyeonggi-do (KR)
(74) Representative: Gulde & Partner

(57) **Abstract**

The present invention refers to a secondary battery comprises an electrode assembly comprising an electrode assembly with a tab extending to a side of the electrode assembly. A current collecting plate is located on the side of the electrode assembly and a protective film is provided between the electrode assembly and the current collecting plate.

## Description

### BACKGROUND

### 1. Field

Aspects of embodiments of the present disclosure relate to a secondary battery, a battery pack, and an electrical device.

### 2. Description of the Related Art

Secondary batteries are batteries that can be charged and discharged, unlike primary batteries that cannot be recharged. Low-capacity secondary batteries may be used in small portable electrical devices, such as smartphones, feature phones, notebook computers, digital cameras, and camcorders, while high-capacity secondary batteries are widely used as power sources for driving motors, such as in hybrid vehicles, electric vehicles, and the like, and as power storage batteries. These secondary batteries include electrodes including a positive electrode and/or a negative electrode, an electrode assembly including the electrodes, a case which accommodates the electrode assembly, and an electrode terminal connected to the electrode assembly.

The electrode includes a substrate and a coating layer formed on the substrate. The coating layer includes an active material. In addition, the electrode includes a tab extending to a side of the substrate. The electrode assembly including such an electrode may be, for example, wound to form a jelly roll.

For example, the cylindrically wound electrode and each terminal may be connected as the tab of the electrode is in contact with the terminal, or the tab of the electrode and the terminal may be connected to each other with a current collecting plate interposed therebetween.

When the electrode and the terminal are connected to each other with the current collecting plate interposed therebetween, for example, a laser welding process may be used for joining thereof. In this case, an outer surface of the terminal is irradiated with a laser, and laser heat may damage an electrode plate and a separator. When the terminal is thickened in consideration of damage caused by laser heat, laser heat loss and penetration dispersion may increase, which adversely affects welding quality. In addition, since the thicknesses of the electrode and the current collecting plate inside the cell are thin compared to the terminal, the laser heat may penetrate into the electrode and damage the electrode.

### SUMMARY

The invention is defined by the appended claims. The description that follows is subject to this limitation. Any disclosure lying outside the scope of said claims is only intended for illustrative as well as comparative purposes.

According to an aspect of embodiments of the present disclosure, a secondary battery capable of preventing (preventing or substantially preventing) damage to an electrode plate and a separator due to laser heat transmitted from the outside, a battery pack, and an electrical device including the same, are provided.

According to one or more embodiments of the present invention, a secondary battery comprising an electrode assembly comprising a first electrode, a second electrode, and separator positioned between the first electrode and the second electrode. A first electrode tab is extending from the first electrode to a side of the electrode assembly and a second electrode tab is extending to another side of the electrode assembly. A current collecting plate is located on the side of the electrode assembly and connected to the first electrode tab, respectively a current collecting plate is located on the another side of the electrode assembly and connected to the second electrode tab. A protective film is between the electrode assembly and the current collecting plate.

### BRIEF DESCRIPTION OF THE DRAWINGS

The following drawings included with the present specification illustrate some embodiments of the present invention and further describe aspects and features of the present invention together with the detailed description of the present disclosure. However, the present invention should not be construed as being limited to the drawings, in which:
FIG. 1 is a cross-sectional view schematically illustrating a cylindrical secondary battery according to the state of art;
FIG. 2 is a schematic view illustrating a process of welding a current collecting plate of a secondary battery that does not include a protective film according to an embodiment of the present invention;
FIG. 3 is a perspective view illustrating a current collecting plate provided with a protective film according to an embodiment;
FIG. 4 is a cross-sectional view illustrating a secondary battery including a protective film according to an embodiment;
FIG. 5 is a perspective view illustrating a current collecting plate provided with a protective film according to another embodiment;
FIG. 6 is a cross-sectional view of the protective film according to FIG. 4;
FIG. 7 is a cross-sectional view illustrating a secondary battery including a protective film according to another embodiment;
FIG. 8 is a perspective view illustrating a current collecting plate provided with a protective film according to another embodiment;
FIG. 9 is a cross-sectional view illustrating a secondary battery according to another embodiment; and
FIG. 10 is a schematic view of a battery pack according to one embodiment of the present invention.

### DETAILED DESCRIPTION

Herein, some example embodiments of the present disclosure will be described in further detail with reference to the attached drawings.

Further, when used herein, the terms "comprise" or "include" and/or "comprising" or "including" specify the presence of the mentioned shapes, numbers, steps, operations, members, elements, and/or groups thereof and are not intended to exclude the presence or addition of one or more other shapes, numbers, operations, members, elements, and/or groups thereof.

In addition, to facilitate understanding of the disclosure, the accompanying drawings may not be drawn to scale, and the dimensions of some components may be exaggerated. In addition, the same reference numbers may be assigned to the same components in different embodiments.

Although "first," "second," and the like may be used to describe various components, the components are not to be limited by these terms. These terms are used to distinguish one component from another, and unless otherwise specifically stated, it is to be understood that a first component may also be a second component.

Throughout the specification, unless otherwise specifically stated, each element may be singular or plural.

When any component is disposed "on (or under)" a component or "above (or below)" a component, it may mean not only that any component is disposed in contact with the component, but also that another component may be interposed between the component and any component disposed on (or under) the component.

In addition, when a component is described as being "connected," "coupled," or "linked" to another component, it is to be understood that the components may be directly coupled or connected to one another, but also that other components may be "interposed" between the components, or that each component may be "connected," "coupled," or "linked" through another component. In addition, when a portion is "electrically coupled" to another part, this includes not only a case in which the portion is "directly connected" but also a case in which the portion is "connected" with another member or element interposed therebetween.

Whenever reference is made throughout the specification to "A and/or B," this means A, B, or A and B, unless otherwise specified. That is, "and/or" includes all or any combination of the listed items. When "C to D" is described, this means C or more and D or less, unless otherwise specified.

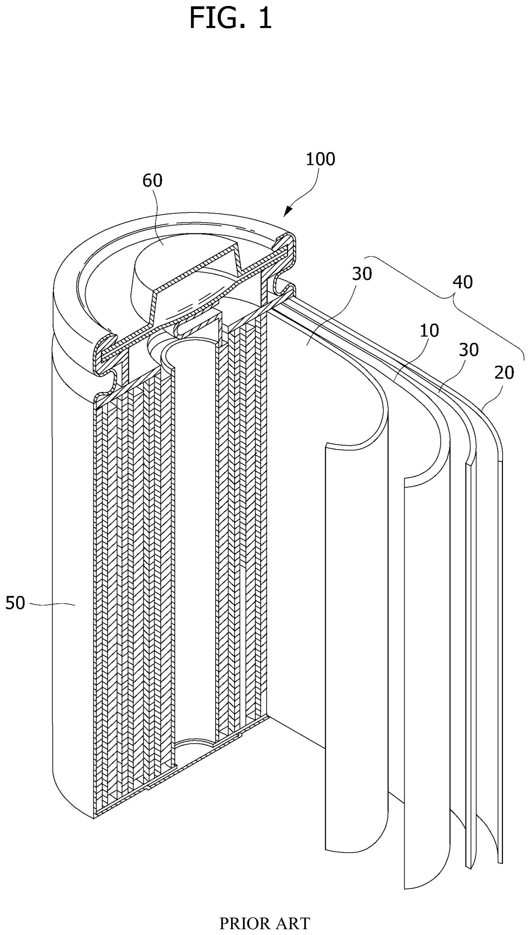

FIG. 1 is a cross-sectional view schematically illustrating a cylindrical secondary battery according to the state of art.

As shown in FIG. 1, a cylindrical lithium ion secondary battery 100 according to an embodiment of the present disclosure may include a cylindrical case 50, an electrode assembly 40, and a cap assembly 60. In an embodiment, the cylindrical lithium ion secondary battery 100 may further include a center pin 70 in some cases. In the secondary battery 100 according to an embodiment of the present disclosure, the cap assembly 60 also performs a current interruption operation, and is also referred to as a current interruption device in some cases.

The cylindrical case 50 may include a generally circular bottom portion and a cylindrical side wall extending a certain length upward from the circumference of the bottom portion. During a manufacturing process of the secondary battery 100, an upper portion of the cylindrical case 50 is open. Therefore, during the assembly process of the secondary battery 100, the electrode assembly 40 and the center pin 70 may be inserted into the cylindrical case 50 together with an electrolyte. The cylindrical case 50 may be manufactured from, for example, but is not limited to, steel, stainless steel, aluminum, an aluminum alloy, or an equivalent thereof.

The electrode assembly 40 may be accommodated inside the cylindrical case 50. The electrode assembly 40 may include a negative electrode 20 in which a negative electrode current collecting plate is coated with a negative electrode active material (e.g., graphite, carbon, and the like), a positive electrode 10 in which a positive electrode current collecting plate is coated with a positive electrode active material (e.g., a transition metal oxide (LiCoO₂, LiNiO₂, LiMn₂O₄, and the like)), and a separator 30 located between the negative electrode 20 and the positive electrode 10 to prevent or substantially prevent short circuits and allow only the movement of lithium ions. In an embodiment, the negative electrode 20, the positive electrode 10, and the separator 30 may be wound into a substantially cylindrical shape.

In an embodiment, the cap assembly 60 includes a vent. The cap assembly 60 may further include at least one of a cap down, a cap up, and a protective film. The cap assembly 60 is coupled to an opening of the case 50 to seal the electrode assembly 40 inside the case 50.

However, embodiments of the present disclosure are not limited thereto, and the case may have any of various shapes, such as any of a circular shape, a pouch shape, and the like. In an embodiment, the case may be composed of a metal, such as any of aluminum, an aluminum alloy, and nickel-plated steel, or a laminated film or plastic forming a pouch.

As described above, the electrode assembly 40 includes the negative electrode 20, the positive electrode 10, and the separator 30 located between the negative electrode 20 and the positive electrode 10. In addition, the electrode assembly 40 is accommodated in the cylindrical case 50 together with an electrolyte (not shown). Herein, the electrode assembly 40 and the electrolyte will be described.

### Positive electrode 10

As the positive electrode active material, a compound capable of reversible intercalation and deintercalation of lithium (lithiated intercalation compound) may be used. In an embodiment, at least one of composite oxides of lithium and a metal selected from cobalt, manganese, nickel, and a combination thereof may be used.

The composite oxide may be a lithium transition metal composite oxide, and some examples thereof may include lithium nickel-based oxides, lithium cobalt-based oxides, lithium manganese-based oxides, lithium iron phosphate-based compounds, cobalt-free nickel-manganese-based oxides, or a combination thereof.

For example, a compound represented as any of chemical formulas below may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above chemical formulas, A is Ni, Co, Mn, or a combination thereof, X is Al, Ni, Co, Mn, Cr, Fe, Mg, Sr, V, a rare earth element, or a combination thereof, D is O, F, S, P, or a combination thereof, G is Al, Cr, Mn, Fe, Mg, La, Ce, Sr, V, or a combination thereof, and L¹ is Mn, Al, or a combination thereof.

The positive electrode 10 for the lithium secondary battery 100 may include a current collector and a positive electrode active material layer formed on the current collector. The positive electrode active material layer may include a positive electrode active material, and may further include a binder and/or a conductive material.

In an embodiment, the content of the positive electrode active material may be 90 wt% to 99.5 wt% based on 100 wt% of the positive electrode active material layer, and the content of each of the binder and the conductive material may be 0.5 wt% to 5 wt% based on 100 wt% of the positive electrode active material layer.

In an embodiment, Al may be used as the current collector, but the present disclosure is not limited thereto.

### Negative electrode 20.

The negative electrode active material may include a material capable of reversibly intercalating and deintercalating lithium ions, lithium metal, an alloy of lithium and a metal, a material capable of doping and dedoping lithium, or a transition metal oxide.

The material capable of reversibly intercalating/deintercalating lithium ions may be a carbon-based negative electrode active material, for example, crystalline carbon, amorphous carbon, or a combination thereof. Examples of the crystalline carbon may include graphite, such as natural graphite or artificial graphite, and examples of the amorphous carbon may include soft carbon, hard carbon, mesophase pitch carbide, calcined coke, and the like.

A Si-based negative electrode active material or Sn-based negative electrode active material may be used as the material capable of doping and dedoping the lithium. The Si-based negative electrode active material may be silicon, a silicon-carbon composite, SiOₓ (0 < x ≤ 2), a Si-based alloy, or a combination thereof.

The silicon-carbon composite may be a composite of silicon and amorphous carbon. According to an embodiment, the silicon-carbon composite may be in the form of silicon particles of which surfaces are coated with amorphous carbon.

The silicon-carbon composite may further include crystalline carbon. For example, the silicon-carbon composite may include a core including crystalline carbon and silicon particles and an amorphous carbon coating layer located on a surface of the core.

The negative electrode 20 for the lithium secondary battery 100 includes a current collector and a negative electrode active material layer located on the current collector. The negative electrode active material layer may include a negative electrode active material and may further include a binder and/or a conductive material.

In an embodiment, for example, the negative electrode active material layer may include 90 to 99 wt% of the negative electrode active material, 0.5 to 5 wt% of the binder, and 0 to 5 wt% of the conductive material.

The binder may include a non-aqueous binder, an aqueous binder, a dry binder, or a combination thereof. If the aqueous binder is used as the negative electrode binder, a cellulose-based compound capable of imparting viscosity may be further included.

The negative electrode current collector may be selected from copper foil, nickel foil, stainless steel foil, titanium foil, nickel foam, copper foam, a polymer substrate coated with a conductive metal, and a combination thereof.

In an embodiment, the electrolyte for the lithium secondary battery 100 includes a non-aqueous organic solvent and a lithium salt.

The non-aqueous organic solvent functions as a medium through which ions involved in the electrochemical reaction of the battery can move.

The non-aqueous organic solvent may be a carbonate-based, ester-based, ether-based, ketone-based, or alcohol-based solvent, an aprotic solvent, or a combination thereof, and may be used alone or in combination of two or more thereof.

In an embodiment, if the carbonate-based solvent is used, a cyclic carbonate and a chain carbonate may be used in combination.

### Separator 30

Depending on a type of lithium secondary battery 100, the separator 30 may be present between the positive electrode 10 and the negative electrode 20. As the separator 30, polyethylene, polypropylene, polyvinylidene fluoride, or a multilayer film of two or more thereof may be used.

The separator 30 may include a porous substrate and a coating layer containing an organic material, an inorganic material, or a combination thereof located on one surface or both, or opposite, surfaces of the porous substrate.

The organic material may include a polyvinylidene fluoride-based polymer or a (meth)acrylic polymer.

The inorganic material may include, but is not limited thereto, inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof.

The organic material and the inorganic material may be present as a mixture in a single coating layer or may be present in a form in which a coating layer including an organic material and a coating layer including an inorganic material are stacked.

According to one or more embodiments of the present invention, there is provided a secondary battery including: an electrode assembly with a tab extending to a side of the electrode assembly; a current collecting plate located on the side of the electrode assembly; and a protective film provided between the electrode assembly and the current collecting plate. In other words, a secondary battery comprises an electrode assembly comprising a first electrode, a second electrode, and separator positioned between the first electrode and the second electrode. A first electrode tab is extending from the first electrode to a side of the electrode assembly and a second electrode tab is extending to another side of the electrode assembly. A current collecting plate is located on the side of the electrode assembly and connected to the first electrode tab, respectively a current collecting plate is located on the another side of the electrode assembly and connected to the second electrode tab. A protective film is between the electrode assembly and the current collecting plate.

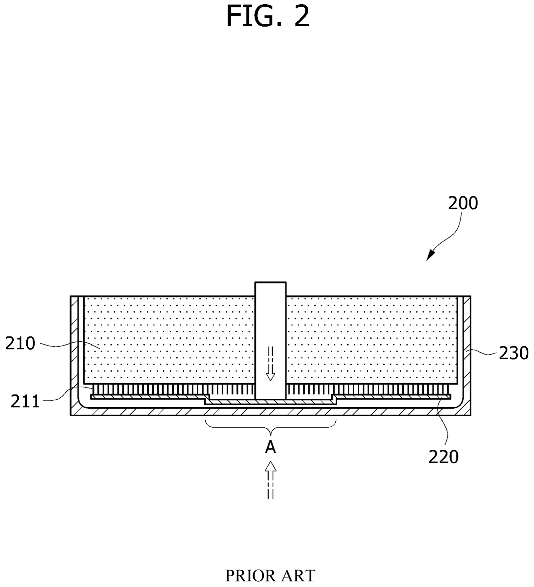

FIG. 2 is a view illustrating a process of welding a current collecting plate of a secondary battery that does not include a protective film according to an embodiment of the present invention.

FIG. 2 illustrates a cross-section of a secondary battery 200 without a protective film according to an embodiment. The secondary battery 200 includes an electrode assembly 210 and a current collecting plate 220 located on a side of the electrode assembly 210. The electrode assembly 210 includes a first electrode, a second electrode, and a separator (not shown). The electrode assembly 210 includes a tab 211 extending to a side, and the tab 211 is connected to a lower terminal of the can 230 with the current collecting plate 220 interposed therebetween.

The current collecting plate 220 is joined to an inner bottom surface of the can 230 by a laser welding process, which may be performed after the electrode assembly 210 is inserted inside the can 230. Laser heat may be irradiated from an outer bottom surface of the can 230 to the inside of the can 230 to weld the current collecting plate 220 to the can 230. The current collecting plate 220 and the can 230 may be joined through a weldable area A. Since the welding portion corresponds to an area in which the current collecting plate and an external terminal (e.g., a can, or a rivet portion) may be in contact with each other and welded, the weldable area A in FIG. 2 is illustrated as a larger area than an actual welding portion.

Pressure may be applied in a direction opposite to a laser irradiation direction by a welding pressure rod provided to a winding core portion of the secondary battery 200. The laser heat and pressure applied during the laser welding process may damage the electrodes and the separator inside the can 230.

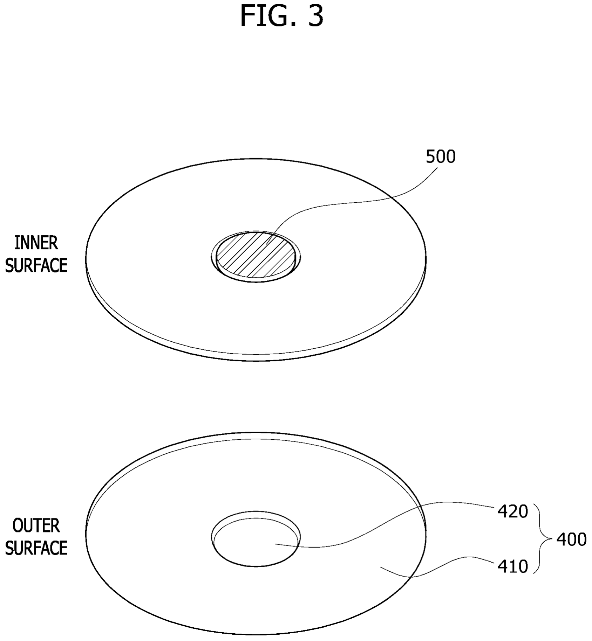

Herein, the protective film of the secondary battery according to an embodiment of the present invention will be described with reference to FIG. 3.

FIG. 3 is a perspective view illustrating a current collecting plate provided with a protective film according to an embodiment. In FIG. 3, the upper drawing is a perspective view of a surface (inner surface) viewed from the inside of the battery, and the lower drawing is a perspective view of the opposite surface (outer surface).

In FIG. 3, 400 denotes a current collecting plate. The current collecting plate 400 may include a plate portion 410 and a protruding portion 420. The plate portion 410 is formed in the form of a flat surface and is connected to the electrode tab, which will be described below. The protruding portion 420 protrudes in a direction opposite to a surface where the plate portion 410 is connected to an electrode tab. A protective film 500 is formed on a surface opposite to the protruding side of the protruding portion 420, that is, a concavely recessed surface.

The protective film 500 according to an embodiment may be formed to be higher than the plate portion 410 of the current collecting plate 400, and, in this case, the protective film 500 is formed to be higher than an upper surface of the current collecting plate 400. In this case, the "upper surface" refers to a surface on which the protective film 500 is arranged or joined. However, in another embodiment, the protective film 500 may be formed at substantially a same height as the plate portion 410 of the current collecting plate 400, and, in this case, the upper surface of the protective film 500 is formed at substantially the same height as the upper surface of the current collecting plate 400. In an embodiment, the current collecting plate 400 may include an uneven structure, and may be joined to the protective film 500 by the uneven structure. For example, the protective film 500 may be joined to the current collecting plate 400 by being attached or fused on the current collecting plate 400.

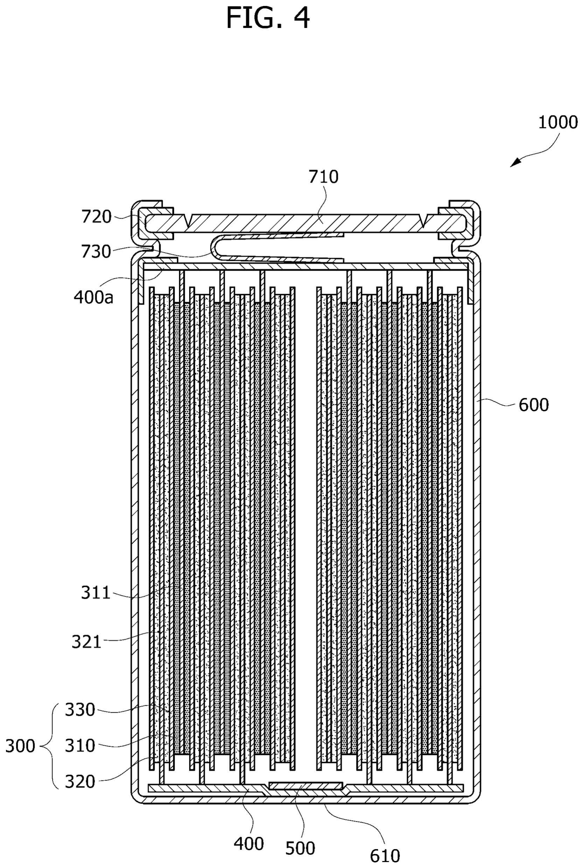

FIG. 4 is a cross-sectional view illustrating a secondary battery including a protective film according to an embodiment.

Referring to FIG. 4, a secondary battery 1000 includes the current collecting plate 400 and the protective film 500 according to the embodiment illustrated in FIG. 3.

In FIG. 4, 300 denotes an electrode assembly. The electrode assembly 300 includes a first electrode 310 and a second electrode 320. For example, the first electrode 310 may be a positive electrode, and the second electrode 320 may be a negative electrode. A separator 330 may be included between the first electrode 310 and the second electrode 320.

The electrode assembly 300 includes a tab extending to a side, and may include a first electrode tab 311 extending from the first electrode 310 and a second electrode tab 321 extending from the second electrode 320. For example, the first electrode tab 311 may be a positive electrode tab, and the second electrode tab 321 may be a negative electrode tab. As illustrated in FIG. 4, the first electrode tab 311 extends from the first electrode 310 and protrudes toward an upper side of the secondary battery 1000, and the second electrode tab 321 extends from the second electrode 320 and protrudes toward a lower side of the secondary battery 1000.

The secondary battery 1000 may further include a can 600 that accommodates the electrode assembly 300.

In FIG. 4, the current collecting plate 400 is formed on a side of the electrode assembly 300, and the current collecting plate 400 is connected to the second electrode tab 321. In FIG. 4, 500 denotes a protective film. The protective film 500 is provided between the electrode assembly 300 and the current collecting plate 400. The current collecting plate 400 according to an embodiment is electrically connected to the can 600. The current collecting plate 400 according to an embodiment may be connected to a terminal portion 610 located on a side surface of the can 600 by laser welding. The terminal portion 610 according to an embodiment may be a rivet insulated from the can 600 and provided on a side thereof.

In FIG. 4, the current collecting plate 400 includes a plate portion and a protruding portion as described in FIG. 3, and the second electrode tab 321 is connected to the plate portion, and the protective film 500 is formed on a concave portion of the protruding portion.

The protective film 500 is formed on a portion of the current collecting plate 400. For example, the electrode assembly 300 may be in a wound form, and the protective film 500 may be formed on the current collecting plate 400 to correspond to a central space that the electrode assembly 300 does not occupy, that is, a winding core portion. The protective film 500 may be formed to correspond to the winding core portion, but may be formed in a wider area than an area occupied by the winding core portion when the secondary battery 1000 is viewed from above, or in a plan view. When the secondary battery 1000 is viewed from above, an area occupied by the protective film 500 may be greater than an area occupied by the winding core portion.

In an embodiment, the protective film 500 is provided between the current collecting plate in contact with an inner bottom surface of the can 600 and the electrode assembly, and may be provided between the current collecting plate 400 in contact with the inner bottom surface of the can 600 and the electrode assembly 300.

In an embodiment, as shown in FIG. 4, the secondary battery 1000 may further include a current collecting plate 400a on another side of the electrode assembly 300. For example, if a welded portion of a portion connected to a lead tab or a terminal plate is a portion that is not welded between the electrode assembly and the current collecting plate, an additional protective film may be further provided between the electrode assembly 300 and the current collecting plate 400a (not shown). In FIG. 4, a terminal plate 710 is located on an upper portion of the can 600, and one or more gaskets 720 are located at both, or opposite, end portions of the terminal plate 710. A lead tab 730 is located between the current collecting plate 400a and the terminal plate 710.

In the laser welding process for joining the current collecting plate 400 to the can 600, the laser is irradiated to the terminal portion 610 of the can 600 from the bottom surface outside the can 600 toward the inside of the can 600. As described above, since the secondary battery 1000 according to an embodiment includes the protective film 500 between the electrode assembly 300 and the current collecting plate 400, the protective film 500 may prevent or substantially prevent the electrode assembly 300 inside the can 600 from being damaged by the laser heat. In addition, it is possible to block the inflow of welding fumes into the electrode assembly 300 during laser welding and act as a cushion when pressing the welding rod to prevent or substantially prevent the occurrence of penetration dispersion.

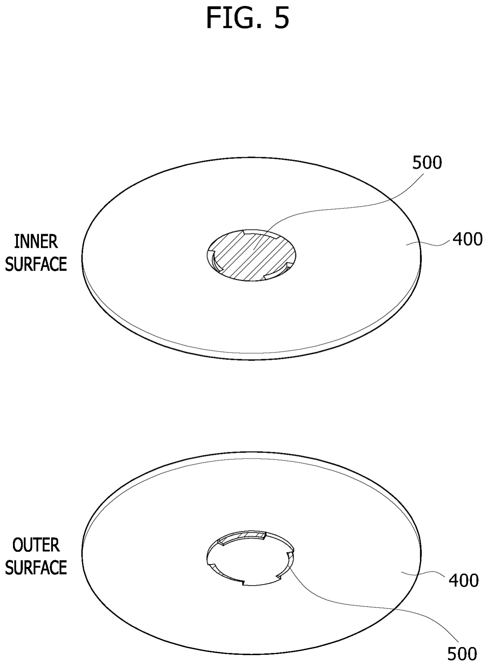

FIG. 5 is a perspective view illustrating a current collecting plate and a protective film according to another embodiment. In FIG. 5, the upper drawing is a perspective view of a surface (inner surface) viewed from the inside of the battery, and the lower drawing is a perspective view of the opposite surface (outer surface).

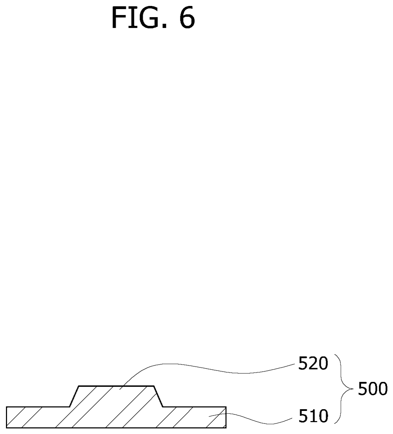

FIG. 6 is a cross-sectional view of a protective film according to another embodiment of the present disclosure.

Referring to FIGS. 5 and 6, a protective film 500 may be formed on a current collecting plate 400, and, in an embodiment, the protective film 500 may be assembled on the current collecting plate 400. In this case, the protective film 500 may be in the form of an injection molded product formed to be assembled on the current collecting plate 400. In an embodiment, the current collecting plate 400 may include an uneven structure at a boundary portion of a protruding portion, and the protective film 500 may be assembled on the current collecting plate 400 by the uneven structure.

In FIG. 6, the protective film 500 includes a flat portion 510 and an insertion portion 520 protruding from the flat portion 510 in a direction. The insertion portion 520 may be inserted into an empty space that is not occupied by the electrode assembly 300 in the secondary battery 1000, that is, a winding core portion.

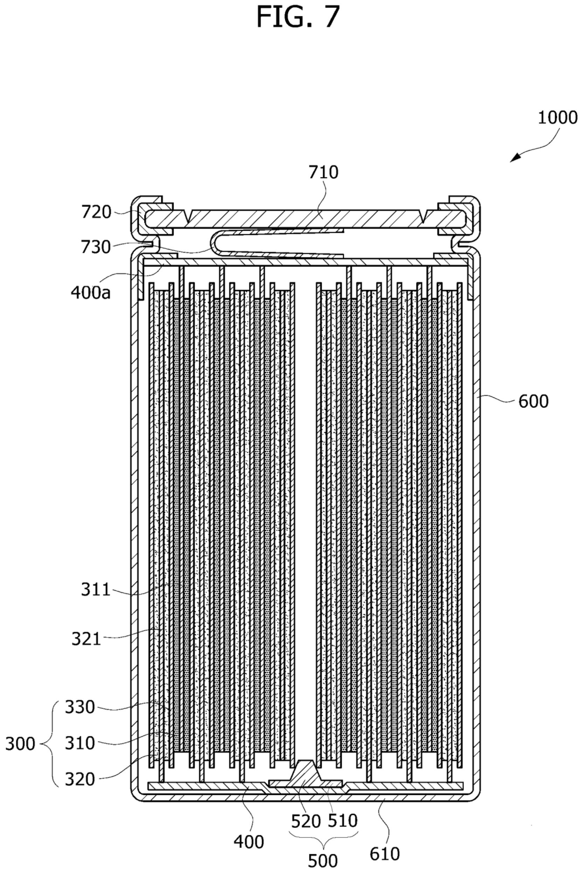

FIG. 7 is a cross-sectional view illustrating a secondary battery including a protective film according to another embodiment.

Referring to FIG. 7, the secondary battery 1000 includes the current collecting plate 400 and the protective film 500 described in FIGS. 5 and 6. As described above, the protective film 500 according to the present embodiment includes the flat portion 510 and the insertion portion 520. As shown in FIG. 7, the insertion portion 520 with a structure protruding toward the electrode assembly 300 may be inserted into an empty space of the electrode assembly 300. In FIG. 7, a description of an overlapping part with the secondary battery according to the embodiment illustrated in FIG. 4 may be omitted.

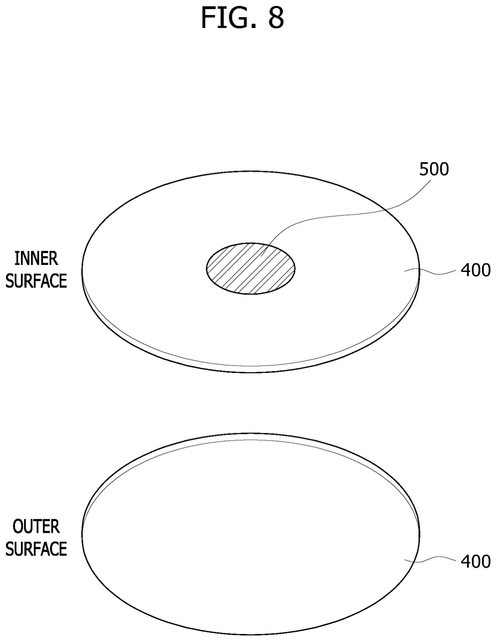

FIG. 8 is a perspective view illustrating a current collecting plate and a protective film according to another embodiment. In FIG. 8, the upper drawing is a perspective view of a surface (inner surface) viewed from the inside of the battery, and the lower drawing is a perspective view of the opposite surface (outer surface).

Referring to FIG. 8, a protective film 500 has a form in which no separate protrusions are formed in a portion that is joined to a current collecting plate 400, for example, a portion welded by laser welding. Here, the protective film 500 may be, for example, in the form of a film, and the protective film 500 may be fused or attached to the current collecting plate 400.

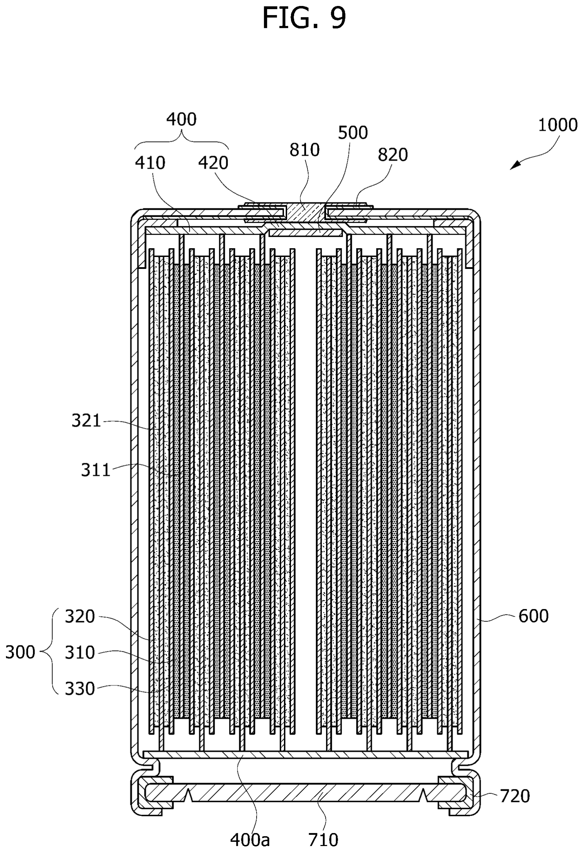

FIG. 9 is a cross-sectional view illustrating a secondary battery according to another embodiment.

In FIG. 9, the secondary battery 1000 includes an electrode assembly 300, and the electrode assembly 300 is accommodated in a can 600. In FIG. 9, a description of an overlapping part with the secondary battery according to above-described embodiments may be omitted.

The electrode assembly 300 includes a first electrode 310 and a second electrode 320. For example, the first electrode 310 may be a positive electrode, and the second electrode 320 may be a negative electrode. A separator 330 may be included between the first electrode 310 and the second electrode 320.

In FIG. 9, the current collecting plate 400 is formed on a side of the electrode assembly 300, and the current collecting plate 400 is connected to a first electrode tab 311. The protective film 500 is provided between the electrode assembly 300 and the current collecting plate 400.

In FIG. 9, 810 denotes a rivet terminal. The current collecting plate 400 according to an embodiment may be connected to the rivet terminal 810 by, for example, laser welding. In the current collecting plate 400 according to an embodiment, 410 may denote an electrode tab welding portion and 420 may denote a terminal welding portion. One or more insulators 820 are provided on both, or opposite, sides of the rivet terminal 810. The protective film 500 may be provided between the current collecting plate 400 and the electrode assembly 300 to protect the electrode assembly 300 from welding laser heat applied to the current collecting plate 400 from the outside of the rivet terminal 810.

In an embodiment, the protective film 500 may be provided between the current collecting plate 400 in contact with the rivet terminal 810 and the electrode assembly 300.

The current collecting plate 400 may include a plate portion and a protruding portion, and the first electrode tab 311 is connected to the plate portion, and the protective film 500 is formed on a concave portion of the protruding portion, that is, on a surface opposite to the protruding portion.

The protective film 500 may be formed on a portion of the current collecting plate 400. For example, the electrode assembly 300 may be in a wound form, and the protective film 500 may be formed under the current collecting plate 400 to correspond to a central space that the electrode assembly 300 does not occupy, that is, a winding core portion. The protective film 500 may be formed to correspond to the winding core portion, but may be formed in a wider area than an area occupied by the winding core portion when the secondary battery 1000 is viewed from above, or in a plan view. When the secondary battery 1000 is viewed from above, an area occupied by the protective film 500 may be greater than an area occupied by the winding core portion.

In FIG. 9, the secondary battery 1000 may further include a current collecting plate 400a on another side of the electrode assembly 300. In an embodiment, as shown in FIG. 9, a point of the lower current collecting plate 400a that is welded to the can is a beading portion (a bent portion of the can), and a protective film may not be generally required. However, for example, in a case of a battery structure in which the can and the terminal plate are directly welded, an additional protective film (not shown) may be further provided between the electrode assembly 300 and the lower current collecting plate 400a in addition to the upper current collecting plate 400.

In FIG. 9, a terminal plate 710 is located at a lower portion of the can 600, and gaskets 720 are located at both end portions of the terminal plate 710.

In the laser welding process for joining the upper current collecting plate 400 to the can 600, the laser is irradiated from the upper surface outside the can 600 toward the inside of the can 600. As described above, the secondary battery 1000 according to an embodiment includes the protective film 500 between the electrode assembly 300 and the current collecting plate 400, and the protective film 500 may prevent or substantially prevent the electrode assembly 300 inside the can 600 from being damaged by the laser heat. In addition, it is possible to block the inflow of welding fumes into the electrode assembly 300 during laser welding and act as a cushion when pressing the welding rod to prevent or substantially prevent the occurrence of penetration dispersion.

The protective film according to various embodiments of the present disclosure described above may include or (essentially) consist a heat-resistant material.

As a non-limiting example, the heat-resistant material may include at least one selected from the group consisting of polyimide (PI), polysulfone, polyurethane (PU), polyamide (PA), 6,6 nylon, polycarbonate (PC), polytetrafluoroethylene (PTFE), polymethyl methacrylate (PMMA), and polyethylene terephthalate (PET), but is not limited thereto.

In an embodiment, the protective film is attached to the current collecting layer in the form of a film, and the protective film may further include an adhesive material. For example, the adhesive material may include at least one of a silicone-based resin, an acrylic resin, a urethane-based resin, a rubber-based resin, an epoxy resin, a polyolefin, and a combination thereof.

For example, the acrylic resin may include an acryl, an ester copolymer, ethyl acrylate, butyl acrylate, hexyl acrylate, n-octyl acrylate, isooctyl acrylate, 2-ethylhexyl acrylate, isononyl acrylate, lauryl acrylate, acrylic acid, maleic acid, fumaric acid, itaconic acid, kryptonic acid, acrylamide, N-vinyl pyrrolidone, N-vinyl caprolactam, acrylonitrile, acryloyl morpholine, 2-hydroxyethyl acrylate, 2-hydroxypropyl acrylate, 2-hydroxybutyl acrylate, or the like.

For example, the urethane-based resin may include polyurethane or the like. For example, the rubber-based resin may include natural rubber, synthetic rubber, or the like.

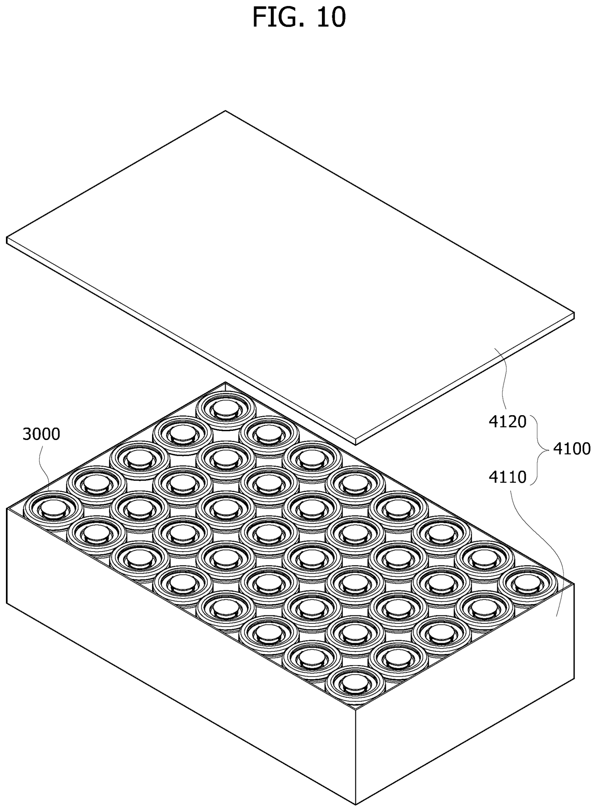

FIG. 10 is a schematic view of a battery pack according to an embodiment of the present disclosure.

Referring to FIG. 10, a battery pack may include a housing 4100 and a secondary battery 3000.

The housing 4100 may form a general exterior of the battery pack and provide a space in which the secondary battery 3000 may be accommodated.

The housing 4100 may include a housing body 4110 and a cover 4120.

The housing body 4110 may be formed to have a shape of a box with an empty interior and an open side. However, a cross-sectional shape of the housing body 4110 is not limited to a rectangular shape, as illustrated in FIG. 8, and may have any of various shapes, such as polygonal, circular, oval, or other shapes.

The cover 4210 may be connected to the housing body 4110 and may close the internal space of the housing body 4110. In an example, the cover 4210 may be formed to have a generally plate shape and may be disposed to face the open side of the housing body 4110. The cover 4210 may be fixed to the housing body 4110 by any of various types of coupling methods, such as any of bolting, welding, fitting, and the like.

The secondary battery 3000 is as described above.

A plurality of secondary batteries 3000 may be provided. The plurality of secondary batteries 3000 may be disposed to form various patterns, such as any of a grid shape, a zigzag shape, and the like in the housing 4100. In an embodiment, the plurality of secondary batteries 3000 may be arranged parallel to each other. The number of secondary batteries 3000 may be varied depending on a size, shape, and the like of the housing 4100, for example.

The plurality of secondary batteries 3000 may be electrically connected by a bus bar (not shown). The plurality of secondary batteries 3000 may be connected by the bus bar in series or parallel. For example, the bus bar may connect the secondary batteries 3000 disposed in a same row in parallel with each other, and connect the secondary batteries 3000 disposed in two adjacent rows in series with each other in the housing 4100. The bus bar may be formed of an electrically conductive material, such as copper, aluminum, nickel, or the like.

According to an embodiment, an electrical device including the above-described battery pack is provided. The electrical device may be, for example, a power storage device or a driving device of an electric vehicle, a hybrid electric vehicle, or a plug-in hybrid electric vehicle, but is not limited thereto.

According to embodiments of the present disclosure, a secondary battery capable of preventing or substantially preventing damage to an electrode plate and a separator due to laser heat applied from an outer surface of a terminal is provided.

## Claims

1. A secondary battery (1000) comprising:
an electrode assembly (300) comprising a tab extending to a side of the electrode assembly;
a current collecting plate (400) located on the side of the electrode assembly (300); and
a protective film (500) between the electrode assembly (300) and the current collecting plate (400).

2. The secondary battery (1000) as claimed in claim 1, further comprising a can (600) which accommodates the electrode assembly (300).

3. The secondary battery (1000) as claimed in claim 2, wherein the current collecting plate (400) is electrically connected to the can (600).

4. The secondary battery (1000) as claimed in claim 3, wherein the current collecting plate (400) is electrically connected to the can (600) by laser welding.

5. The secondary battery (1000) as claimed in claim 3 or 4, wherein the can (600) comprises a terminal portion (610) located on a side surface of the can (600).

6. The secondary battery (1000) as claimed in claim 5, wherein the terminal portion (610) comprises a rivet insulated from the can (600) and arranged on a side.

7. The secondary battery (1000) as claimed in claim 2, wherein the protective film (500) is between an inner bottom surface of the can (600) and the electrode assembly (300).

8. The secondary battery (1000) as claimed in claim 2, wherein the protective film (500) is between a rivet terminal (810) of the can (600) and the electrode assembly (300).

9. The secondary battery (1000) as claimed in any one of the proceeding claims, wherein the protective film (500) is located on a partial area of the current collecting plate (400).

10. The secondary battery (1000) as claimed in any one of the proceeding claims, wherein the electrode assembly (300) is wound around a winding core portion, and the protective film (500) is located on the current collecting plate (400) to correspond to the winding core portion.

11. The secondary battery (1000) as claimed in claim 10, wherein, when the secondary battery (1000) is viewed in a plan view, an area of the protective film (500) is larger than an area of the winding core portion.

12. The secondary battery (1000) as claimed in claim 10 or 11, wherein the protective film (500) comprises:
a flat portion (510); and
an insertion portion (520) protruding from the flat portion (510) toward the electrode assembly (300), and
at least a portion of the insertion portion (520) is inserted in the winding core portion.

13. The secondary battery (1000) as claimed in any one of the proceeding claims, wherein the current collecting plate (400) comprises:
a plate portion (410) to which the first electrode tab (311), respectively the second electrode tab (321) is attached; and
a protruding portion (420) located at a central portion of the current collecting plate (400) and protruding to an opposite side of the electrode assembly (300), and
the protective film (500) is located on an opposite surface of the protruding portion (420).

14. A battery pack comprising:
a housing (4100); and
a plurality of secondary batteries (3000) according to any one of claims 1 to 13,
wherein the plurality of secondary batteries (3000) being disposed inside the housing (4100).

15. An electrical device comprising the battery pack of claim 14.
